# DEMANDE DE BREVET EUROPEEN

(11) **EP 0 875 542 A1**
(43) Date de publication de la demande: **04.11.1998**
(21) Numéro de dépôt: 98401011.6
(22) Date de dépôt: 24.04.1998
(51) Int. Cl.: C09D 5/02, D06M 15/347, C08L 57/10

(54) **Système monocomposant à base de polymères coréactifs**

(30) Priorité: 29.04.1997 FR 9705271
(71) Demandeur: ELF ATOCHEM S.A., 92800 Puteaux, Hauts-de-Seine (FR)
(72) Inventeur: Vergé, Christophe, 27170 Beaumontel (FR); Betremieux, Isabelle, 27170 Beaumontel (FR)

(57) **Abrégé**

L'invention concerne un système monocomposant stable au stockage contenant au moins deux polymères coréactifs réticulables à basse température. Lesdits polymères sont préparés par polymérisation radicalaire en émulsion aqueuse et portent l'un une fonction aldéhyde ou aldéhyde masqué et l'autre une fonction acétoacétoxyéthyle.

Elle concerne aussi les films réticulés utilisés comme revêtements obtenus à partir d'un tel système.

## Description

L'invention concerne les compositions aqueuses, désignées par latex, stables au stockage contenant des polymères coréactifs conduisant à des films réticulables à basse température. Elle concerne aussi les films réticulables obtenus à partir de ces latex et leur application dans le domaine des revêtements.

Ces compositions peuvent être utilisées dans les industries de revêtements en particulier dans les peintures, les adhésifs, le papier, le cuir ou les textiles.

D'une manière générale, les compositions filmogènes utilisées dans les industries citées précédemment contiennent des latex comme liants. Ceci nécessite dans certains cas une post-réticulation destinée à améliorer les propriétés des revêtements obtenus, en particulier la tenue aux solvants et les propriétés mécaniques ainsi que la réduction du collant superficiel.

Cette étape de réticulation doit être adaptée aux conditions de mise en oeuvre et au domaine d'application.

Souvent la post-réticulation engendre certains problèmes tels que le jaunissement et la dégradation du film, ou encore un coût supplémentaire de production.

Cependant la réticulation à basse ou à moyenne température a été décrite, en particulier dans les peintures pour le bâtiment qui nécessitent une mise en oeuvre à température ambiante et parfois même en dessous. En revanche les revêtements du bois, du cuir ou des peintures industrielles tolèrent des températures intermédiaires.

Les systèmes réticulables à basse ou à moyenne température sont généralement basés sur la combinaison de deux éléments qui sont l'utilisation de monomères fonctionnels copolymérisés lors de la synthèse du liant et l'ajout après la synthèse ou au moment de la mise en oeuvre d'un agent multifonctionnel réticulant.

A titre d'exemples EP 552469, EP 555774, EP 653469 décrivent l'utilisation d'un monomère fonctionnel à base d'acétoacétoxyéthyle réticulé par une polyamide. En revanche EP 581466 réticule le même monomère fonctionnel avec un polyaldéhyde.

De même DE 4219384 décrit la réticulation des polymères fonctionnalisés par les diacétones acrylamides avec une hydroxyamine. US 5468800, DE 4439457 décrivent la réticulation des polymères contenant des fonctions uréïdo par les polyaldéhydes ou les polyacétals.

L'inconvénient majeur de ces systèmes est que l'agent réticulant est en général une petite molécule ajoutée dans la solution après la synthèse du latex. Cette molécule de par sa taille et son coefficient de partage entre phase aqueuse et phase organique (polymère) diffuse dans le polymère entraînant une pré-réticulation et rendant donc le stockage de la composition difficile, voire impossible. Certes on peut ajouter le réticulant à la mise en oeuvre, mais ceci rend l'opération plus compliquée et plus coûteuse.

Le problème que cherche à résoudre l'invention est donc de trouver un système monocomposant, stable au stockage et réticulable à basse température.

La demanderesse vient de trouver une solution en mettant au point une composition aqueuse stable contenant au moins deux polymères, désignés par liants coréactifs réagissant à basse température au moment de la coalescence.

La composition selon l'invention contient au moins deux liants fonctionnalisés que l'on peut mélanger après synthèse de chacun d'eux sans que la réaction entre les fonctions portées par l'un ou l'autre ne se produise au cours du stockage et qui conduisent pendant ou après la coalescence à basse température ou à température ambiante à un film réticulé.

La découverte de cette combinaison de polymères est d'autant moins évidente qu'il ne suffit pas que les fonctions précitées réagissent entre elles seulement pendant ou après la coalescence, car il faut encore qu'elles ne réagissent pas pendant le stockage et que la cinétique de réticulation ne perturbe pas la coalescence des particules et donc la formation du film.

Conformément à la présente invention, les synthèses séparées des deux polymères fonctionnalisés permettent de préserver au mieux chacune des fonctions car la température de polymérisation est généralement supérieure à la température ambiante et a fortiori à la température de réaction des deux liants.

La présente invention a donc pour objet un système monocomposant à base de polymères coréactifs réticulables à basse température. Ledit système est constitué par le mélange d'au moins deux dispersions de liants obtenus chacun par polymérisation en émulsion en milieu aqueux d'une composition de monomères.

Lesdits liants sont dispersés sous forme de particules de diamètre moyen de 50 à 500 nm.

Les particules de l'invention contiennent
- de 98 à 2 % et de préférence de 95 à 5 % d'un liant A porteur de fonctions aldéhyde ou aldéhyde masqué,
- de 98 à 2 % et de préférence de 5 à 95 % d'un liant B porteur de fonctions acétoacétoxyéthyle,
- de 0 à 50 % d'au moins un liant C ne réagissant pas ni avec le liant A ni avec le liant B.

Le liant A est un polymère contenant
- de 0,5 à 10 % en poids et de préférence de 1 à 8 % d'au moins un monomère A1 portant la fonction aldéhyde, acétal ou un groupe précurseur de fonctions aldéhydes.
- de 90 à 99,5 % en poids et de préférence de 92 à 99 % d'au moins un monomère choisi dans le groupe I.

Le monomère A1 peut être choisi parmi les aldéhydes tels que l'acroléine, la méthacroléine, le formyl styrol, le crotonaldéhyde et les aldéhydes de formule : 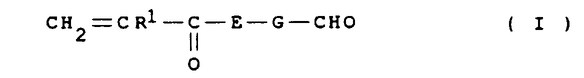 et les aldéhydes masqués de formule : 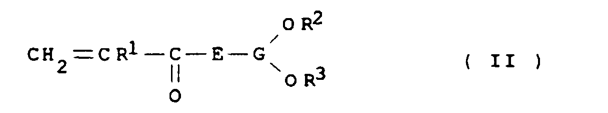 formules (I) et (II) dans lesquelles :
- R¹ représente un atome d'hydrogène ou un radical méthyle ;
- R² et R³, identiques, représentent chacun un groupe alkyle en C₁-C₈, ou bien forment ensemble un groupe -CH₂-CR⁴R⁵-(CH₂)ₙ- où n = 0 ou 1 et R⁴ et R⁵, identiques ou différents, représentent chacun un atome d'hydrogène ou un groupe méthyle ;
- E représente O, NH ou *NR*' (*R*' = alkyle en C₁-C₄) ;
- G représente un reste alkylène en C₁-C₄ ou un reste 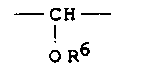 où R⁶ représente un atome d'hydrogène ou un reste alkyle en C₁-C₄.

Le monomère A1 préféré peut être choisi parmi :
- les N-(2,2-dialcoxy 1-hydroxy éthyl)-(méth)acrylamides et les N-(1,2,2-trialcoxy éthyl)-(méth)acrylamides, le terme alcoxy signifiant alcoxy en C₁-C₄, tels que
   . le N-(2,2-diméthoxy 1-hydroxy éthyl)-acrylamide ;
   . le N-(2,2-diméthoxy 1-hydroxy éthyl)-méthacrylamide ;
   . le N-(1,2,2-triméthoxy éthyl)-acrylamide ;
   . le N-(1,2,2-triméthoxy éthyl)-méthacrylamide ;
   . le N-(2,2-dibutoxy 1-hydroxy éthyl)-acrylamide ;
   . le N-(2,2-dibutoxy 1-hydroxy éthyl)-méthacrylamide ;
   . le N-(1,2,2-tributoxy éthyl)-acrylamide ;
   . le N-(1,2,2-tributoxy éthyl)-méthacrylamide ;
- le 4-acrylamidobutyraldéhyde diméthyl ou diéthyl acétal ;
- le méthacrylamidoacétaldéhyde diméthyl acétal ;
- l'acrylate de diéthoxypropyle ;
- le méthacrylate de diéthoxypropyle ;
- l'acryloyloxopropyl-1,3-dioxolane ;
- le méthacryloyloxopropyl-1,3-dioxolane; et
- le N-(1,1-diméthoxy-but-4-y1)méthacrylamide.

Selon une forme avantageuse de l'invention A1 est le N-(2,2, diméthoxy 1-hydroxyéthyl) acrylamide, désigné par Highlink DMH.

Le groupe I est un groupe de monomères neutres polymérisables en émulsion aqueuse par voie radicalaire contenant les (méth)-acryliques, les styréniques, les vinyliques...

Le liant B est un polymère contenant
- de 0,5 à 10 % en poids et de préférence de 1 à 8 % d'au moins un monomère B1 contenant la fonction acétoacétoxyéthyle,
- de 90 à 99,5 % et de préférence de 92 à 99 % d'au moins un monomère choisi dans le groupe I.

B1 est choisi dans le groupe constitué des monomères éthyléniquement insaturés et contenant au moins une fonction acétoacétoxyéthyle. Parmi ces monomères on peut citer :
- le (méth)acrylate d'acétoacétoxyéthyle
- le (méth)acrylate de 2-cyanoacétoxyéthyle
- le N-(2 acétoacétoxyéthyl) (méth)acrylamide
- le N-(2 acétoacétoamidoéthyl) (méth)acrylamide.

Selon une forme avantageuse de l'invention B1 est le méthacrylate d'acétoacétoxyéthyle, désigné ci-après par AAEM.

Le latex C est un polymère contenant au moins un monomère choisi dans le groupe I.

Chacun des liants est préparé séparément selon les techniques de polymérisation en émulsion connues de l'homme du métier. Ainsi, la réaction est préférentiellement conduite sous atmosphère inerte en présence d'amorceurs radicalaires. Le système d'amorçage utilisé peut être un système Red-Ox tel que Na₂S₂O₈, (NH₄)₂S₂O₈ / Na₂S₂O₅, Na₂SO₃, un système thermique tel que (NH₄)₂S₂O₈, les quantités utilisées étant comprises entre 0,2 et 1,0 % en poids par rapport à la masse totale des monomères, préférentiellement entre 0,25 et 0,5 % en poids.

La réaction de polymérisation en émulsion selon l'invention est menée à une température comprise entre 65 et 85°C et est fonction de la nature du système d'amorçage utilisé : 65 - 75°C pour les systèmes Red-Ox à base de peroxodisulfate et de métabisulfite, 70 - 85°C pour les systèmes thermiques à base de peroxodisulfate seul.

La préparation des dispersions selon l'invention est effectuée de préférence selon un procédé de type semi-continu permettant de limiter les dérives de composition qui sont fonction des différences de réactivité des différents monomères. L'introduction des monomères sous forme d'une préémulsion avec une partie de l'eau et des tensio-actifs est ainsi généralement réalisée sur une période de temps de 3 heures 30 à 5 heures. Il est également utile, bien que non indispensable, d'effectuer un ensemencement de 1 à 15 % des monomères. Les systèmes émulsifiants utilisés dans le procédé de polymérisation en émulsion selon l'invention sont choisis dans la gamme des émulsifiants possédant une balance hydrophile/lipophile adaptée. Les systèmes préférés sont constitués par l'association d'un tensio-actif anionique, tel que le laurylsulfate de sodium, les nonylphénol sulfates éthoxylés en particulier à 20 - 25 moles d'oxyde d'éthylène, le benzène dodécylsulfonate et les alcools gras éthoxylés sulfates, et d'un tensio-actif non ionique, tel que les nonylphénols éthoxylés en particulier à 10 - 40 moles d'oxyde d'éthylène et les alcools gras éthoxylés.

La quantité totale d'émulsifiant est généralement comprise dans la gamme de 1 à 5 % en poids et préférentiellement de 2 à 4 % en poids par rapport aux monomères.

Les mélanges des dispersions selon l'invention sont réalisés à la température ambiante.

Chaque dispersion est alors analysée en particulier au niveau des propriétés du film obtenu par un séchage à température ambiante, puis du même film après un traitement thermique supplémentaire de 15 minutes à 160°C.

Les propriétés du film évaluées sont la résistance au solvant qui est déterminée par des mesures de pourcentages d'insolubles d'éprouvettes immergées dans l'acétone à température ambiante pendant 24 h et du pourcentage d'acétone absorbé par ces mêmes éprouvettes que nous appelons indice de gonflement, ainsi que les propriétés mécaniques du film au travers d'un test de traction (détermination de la contrainte et de l'allongement à la rupture).

Le degré de réticulation du film et donc ses bonnes propriétés applicatives seront caractérisés par un taux d'insolubles le plus élevé possible, un indice de gonflement le plus faible possible, ainsi qu'une contrainte et un allongement à la rupture les plus élevés possible.

L'existence d'une réticulation à température ambiante du film lors de la coalescence sera mise en évidence par un film issu de mélange conduisant à des propriétés supérieures à celles des latex de départ alors que l'existence d'une réticulation en température du film sera mise en évidence par la comparaison des propriétés avant et après traitement thermique.

Dans le cas présent, le mélange d'un latex fonctionnalisé par un monomère porteur d'une fonction acétal (DMH) avec un latex fonctionnalisé par un monomère porteur d'une fonction acétoacétoxyéthyle (AAEM) conduit à un film qui réticule à température ambiante et présente donc des propriétés améliorées.

La bonne stabilité au stockage du mélange de latex et donc la possibilité de produire un système monocomposant, est vérifiée par la détermination des propriétés d'un film obtenu à partir du mélange ayant subi un stockage de 10 jours à 60°C et la comparaison de ses propriétés avec les propriétés du film issu du mélange fraîchement préparé. La stabilité du latex est également vérifiée par un suivi des caractéristiques de base du latex à savoir la taille des particules, la viscosité, etc...

Dans le cas présent, les propriétés du film issu du mélange avant et après un traitement thermique de 15 minutes à 160°C sont égales quelque soit le traitement subi par le mélange de latex (mélange frais ou ayant subi un traitement de 10 jours à 60°C), montrant la bonne stabilité au stockage du mélange.

La présente invention porte également sur des compositions destinées à constituer un revêtement réticulable, tel qu'une peinture dans le domaine du bâtiment, un vernis ou un apprêt pour cuirs, un apprêt pour textiles, un vernis de protection pour bois, caractérisées par le fait qu'elles comportent, comme liant, un système de latex coréactifs tel que défini ci-dessus.

Les exemples suivants illustrent la présente invention sans toutefois en limiter la portée. Dans ces exemples, les parties et pourcentages sont en poids sauf indication contraire.

### Exemple 1

### Synthèse des liants

Les liants ont été synthétisés de manière classique selon un procédé de polymérisation semi continu par addition simultanée et séparée, d'une solution d'amorceur et d'une préémulsion sur un pied de cuve, préalablement chauffé à 75°C, se trouvant dans le réacteur, équipé d'une circulation d'eau chaude dans la double enveloppe, d'une agitation centrale, et d'un condenseur.

Certaines synthèses ont été réalisées en milieu tamponné du bicarbonate de sodium ayant été, dans ce cas, introduit dans la préémulsion.

| Pied de cuve | |
|---|---|
| Eau | 54.00 parts |
| Alcool gras éthoxylé sulfate de sodium à 32 % dans l'eau | 0.25 |
| Alcool gras éthoxylé à 65 % dans l'eau | 0.05 |

| Préémulsion | |
|---|---|
| Eau | 62.00 |
| Alcool gras éthoxylé sulfate de sodium à 32 % dans l'eau | 2.25 |
| Alcool gras éthoxylé à 65 % dans l'eau | 0.45 |
| Monomères | 100.00 |

| Solution d'amorceur | |
|---|---|
| Eau | 6.00 |
| Persulfate de sodium | 0.30 |

Les quantités sont exprimées en parts de matières actives.

### Mode opératoire

Introduire le pied de cuve dans le réacteur, homogénéiser et porter à 75°C.

Lorsque la température du pied de cuve atteint 75°C, couler la préémulsion et la solution d'amorceur en 4 h.

Laisser réagir une heure supplémentaire à 75°C.

Refroidir jusqu'à température ambiante, et filtrer sur toile de 100 microns.

### Caractéristiques des latex synthétisés

Les caractéristiques des produits synthétisés sont les suivantes :

| Monomères | A | B |
|---|---|---|
| Acrylate diéthyle | 98 | 98 |
| AAEM | 2 | - |
| Highlink DMH | - | 2 |
| Extrait sec (%) | 44.3 | 43.8 |
| pH | 2.0 | 3.2 |
| Diamètre (nm) | 112 | 149 |
| Viscosité (mPa.s) | 225 | < 100 |

Le méthacrylate d'acétoacétoxyéthyle est commercialisé par la société Eastmann.

L'Highlink DMH est commercialisé en solution aqueuse à 50 % par la société Hoechst.

### Exemple 2

### Réticulation et aptitude à la réticulation des films issus des latex de base

Le degré de pré-réticulation de chaque film latex obtenu par séchage à 23°C et le degré de post-réticulation thermique des films séchés comme précédemment puis soumis à un traitement thermique 15 mn à 160°C, ont été déterminés par une mesure des taux d'insolubles et des pourcentages d'acétone absorbé (indice de gonflement), sur des éprouvettes (moyenne de 3 mesures), après immersion 24 h dans l'acétone.

Les dimensions des éprouvettes sont de 10 x 25 mm, l'épaisseur étant comprise entre 1 et 2 mm.

| Référence | A | B |
|---|---|---|
| Indice de gonflement (23°C) | ∞ | ∞ |
| Indice de gonflement (160°C) | 40.4 | 6.8 |
| % Insolubles (23°C) | 0 | 0 |
| % Insolubles (160°C) | 72.0 | 95.1 |

Le latex A et le latex B ne sont absolument pas pré-réticulés, le latex A présentant une faible aptitude à la post-réticulation thermique alors que le latex B présente une excellente aptitude à la réticulation thermique.

### Exemple 3

### Mélange de latex coréactifs

Connaissant les caractéristiques des latex de base, divers mélanges des latex A et B ont été réalisés à température ambiante, les caractéristiques des films provenant de ces mélanges ayant été examinées comme précédemment après séchage à 23°C, 50 % HR, puis après traitement thermique 15 mn à 160°C.

| Mélange N° | Latex A % | Latex B % | IG (25°C) % | IG (160°C) % | % ins. (25°C) % | % ins. (160°C) % |
|---|---|---|---|---|---|---|
| 1 | 100 | 0 | ∞ | 40.4 | 0 | 72.0 |
| 2 | 75 | 25 | 29.5 | 21.1 | 77.7 | 78.5 |
| 3 | 55 | 45 | 24.3 | 12.6 | 78.2 | 84.5 |
| 4 | 50 | 50 | 35.2 | 11.8 | 71.3 | 84.2 |
| 5 | 25 | 75 | 18.4 | 10.5 | 85.5 | 91.4 |
| 6 | 0 | 100 | ∞ | 6.8 | 0 | 95.1 |

Le mélange des deux latex conduit à un film présentant un degré de réticulation supérieur à celui des latex de départ traduisant l'existence d'une réticulation à température ambiante. Cette réticulation peut être augmentée par un traitement thermique.

### Exemple 4

### Propriétés mécaniques

Les propriétés mécaniques du film issu du mélange N° 3 sont comparées aux propriétés mécaniques des latex A et B, au travers d'un test de traction réalisé selon la norme ISO 527.

| Film | Allongement à la rupture (%) séchage 23°C | Contrainte à la rupture (MPa) séchage 23°C | Allongement à la rupture (%) recuit 160°C | Contrainte à la rupture (MPa) recuit 160°C |
|---|---|---|---|---|
| A | 1800 | 0.14 | 820 | 0.24 |
| B | 1100 | 1.2 | 442 | 1.22 |
| Mélange N° 3 | 1360 | 1.64 | 1060 | 2.4 |

La contrainte à la rupture du mélange est bien supérieure à celles des latex de base mettant en évidence une réaction de réticulation à basse température.

### Exemple 5

### Stabilité au stockage

Le mélange N° 4 est placé 10 jours à 60°C puis refroidi à température ambiante. Un nouveau film est alors préparé comme précédemment par séchage du latex à 23°C, la résistance à l'acétone du film avant et après traitement thermique étant comparée à celle du film issu du mélange frais.

| Film | IG (23°C) | IG (160°C) | % ins. (23°C) | % ins. (160°C) |
|---|---|---|---|---|
| Mélange N° 4 | 35.2 | 11.8 | 71.3 | 84.2 |
| Mélange N° 4 (10 j 60°C) | 25.2 | 13.7 | 82.4 | 89.0 |

Les propriétés du film après vieillissement accéléré du latex 10 jours à 60°C sont sensiblement équivalentes à celles du film obtenu à partir du latex frais.

## Revendications

1. Système monocomposant à base d'une dispersion aqueuse de polymères coréactifs susceptible de conduire à des revêtements réticulables à basse température, lesdits polymères représentant de 10 à 30 % en poids du système monocomposant et étant répartis entre :
- de 2 à 98 % et de préférence de 5 à 95 % en poids d'un polymère A porteur de fonctions aldéhyde ou aldéhyde masqué
- de 2 à 98 % et de préférence de 5 à 95 % en poids d'un polymère B porteur de fonctions acétoacétoxyéthyle
- de 0 à 50 % en poids d'un polymère C ne réagissant pas ni avec A ni avec B obtenu par la polymérisation d'au moins un monomère choisi dans le groupe I constitué de monomères neutres et contenant les (méth)acrylates, les monomères vinyliques, le styrène et ses dérivés.

2. Système monocomposant selon la revendication 1 tel que le polymère A est obtenu par la polymérisation en émulsion d'un mélange de monomères contenant :
- de 0,5 à 10 % en poids et de préférence de 1 à 8 % d'au moins un monomère A1 portant la fonction aldéhyde ou aldéhyde masqué
- de 90 à 99,5 % en poids et de préférence de 92 à 99 % d'au moins un monomère choisi dans le groupe I.

3. Système monocomposant selon la revendication 1 ou 2 tel que le monomère A1 est choisi dans le groupe constitué de
- les N-(2,2-dialcoxy 1-hydroxy éthyl)-(méth)acrylamides et les N-(1,2,2-trialcoxy éthyl)-(méth)acrylamides, le terme alcoxy signifiant alcoxy en C₁-C₄, tels que
. le N-(2,2-diméthoxy 1-hydroxy éthyl)-acrylamide ;
. le N-(2,2-diméthoxy 1-hydroxy éthyl)-méthacrylamide ;
. le N-(1,2,2-triméthoxy éthyl)-acrylamide ;
. le N-(1,2,2-triméthoxy éthyl)-méthacrylamide ;
. le N-(2,2-dibutoxy 1-hydroxy éthyl)-acrylamide ;
. le N-(2,2-dibutoxy 1-hydroxy éthyl)-méthacrylamide ;
. le N-(1,2,2-tributoxy éthyl)-acrylamide ;
. le N-(1,2,2-tributoxy éthyl)-méthacrylamide ;
- le 4-acrylamidobutyraldéhyde diméthyl ou diéthyl acétal ;
- le méthacrylamidoacétaldéhyde diméthyl acétal ;
- l'acrylate de diéthoxypropyle ;
- le méthacrylate de diéthoxypropyle ;
- l'acryloyloxopropyl-1,3-dioxolane ;
- le méthacryloyloxopropyl-1,3-dioxolane; et
- le N-(1,1-diméthoxy-but-4-yl)méthacrylamide.

4. Système monocomposant selon la revendication 3 tel que le monomère A1 est le N-(2,2, diméthoxy-1 hydroxyéthyl) acrylamide.

5. Système monocomposant selon l'une des revendications 1 à 4 tel que le polymère B est obtenu par la polymérisation en émulsion aqueuse d'un mélange de monomères contenant
- de 0,5 à 10 % en poids et de préférence de 1 à 8 % d'au moins un monomère B1 contenant une fonction acétoacétoxyéthyl
- de 90 à 99,5 % en poids et de préférence de 92 à 99 % d'au moins un monomère choisi dans le groupe I.

6. Système monocomposant selon la revendication 5 tel que le monomère B1 est choisi dans le groupe constitué de :
- le (méth)acrylate d'acétoacétoxyéthyle
- le (méth)acrylate de 2-cyanoacétoxyéthyle
- le N-(2 acétoacétoxyéthyl) (méth)acrylamide
- le N-(2 acétoacétoamidoéthyl) (méth)acrylamide.

7. Système monocomposant selon la revendication 6 tel que B1 est le méthacrylate d'acétoacétoxyéthyle.

8. Système monocomposant selon l'une des revendications 1 à 7 caractérisé par le fait que les polymères coréactifs soient dispersés sous forme de particules de diamètre compris entre 50 et 500 nm.

9. Film réticulé constituant un revêtement comme peinture, vernis, apprêt ou adhésif utilisé dans le traitement du papier, du bois, du textile tel qu'on peut l'obtenir par la coalescence de systèmes monocomposants des revendications 1 à 8.
